# EUROPEAN PATENT APPLICATION

(11) **EP 4 159 817 A1**
(43) Date of publication of application: **05.04.2023**
(21) Application number: 21891703.7
(22) Date of filing: 01.11.2021
(51) Int. Cl.: C08L 101/00, B60C 1/00, C08F 293/00, C08K 3/04, C08K 3/36, C08L 9/06, C08L 29/10, C08L 33/26

(54) **PLASTICIZER, COMPOSITION, AND TIRE**

(30) Priority: 11.11.2020 JP 2020187834
(71) Applicant: Sumitomo Rubber Industries, Ltd., Kobe-shi, Hyogo 651-0072 (JP)
(72) Inventor: WASHIZU, Kensuke, Kobe-shi, Hyogo 651-0072 (JP)
(74) Representative: TBK
(86) International application number: PCT/JP2021/040252
(87) International publication number: WO 2022/102456

(57) **Abstract**

Provided are a plasticizer which is capable of changing tire performance in a temperature range necessary for a tire and is also usable for the preparation of a tire composition, as well as a composition and a tire thereof. The present invention relates to a plasticizer for resins and/or elastomers, the plasticizer containing a group that changes its interaction with respect to an antifreeze with changes in temperature, the group having a lower critical solution temperature of -20°C to 20°C.

## Description

### TECHNICAL FIELD

The present invention relates to a plasticizer, a composition, and a tire.

### BACKGROUND ART

Tires with various desirable properties have been desired (see, for example, Patent Literature 1).

### CITATION LIST

### PATENT LITERATURE

Patent Literature 1: JP 2008-214377 A

### SUMMARY OF INVENTION

### TECHNICAL PROBLEM

To date, however, the tire industry has not focused on changing tire performance in a temperature range necessary for a tire, and conventional techniques have room for improvement in terms of changing tire performance in a temperature range necessary for a tire.

The present invention aims to solve the above problem and provide a plasticizer which is capable of changing tire performance in a temperature range necessary for a tire and is also usable for the preparation of a tire composition, as well as a composition and a tire thereof.

### SOLUTION TO PROBLEM

The present invention relates to a plasticizer for at least one of resins or elastomers, the plasticizer containing a group that changes its interaction with respect to an antifreeze with changes in temperature, the group having a lower critical solution temperature of -20°C to 20°C.

### ADVANTAGEOUS EFFECTS OF INVENTION

The plasticizer for resins and/or elastomers according to the present invention contains a group that changes its interaction with respect to an antifreeze with changes in temperature, and the group has a lower critical solution temperature of -20°C to 20°C. Thus, the plasticizer is capable of changing tire performance in a temperature range necessary for a tire and is also usable for the preparation of a tire composition.

### DESCRIPTION OF EMBODIMENTS

### (Plasticizer)

The plasticizer of the present invention is a plasticizer for resins and/or elastomers which contains a group that changes its interaction with respect to an antifreeze with changes in temperature and in which the group has a lower critical solution temperature of -20°C to 20°C. Such a plasticizer is capable of changing tire performance in a temperature range necessary for a tire and is also usable for the preparation of a tire composition.

The reason for this advantageous effect is not exactly clear but is believed to be as follows.

Since the plasticizer of the present invention contains a group that changes its interaction with respect to an antifreeze with changes in temperature, it is believed that temperature changes may change the hydrophilicity to change the compatibility with other components in the composition, and thus the tire performance may change in response to changes in temperature.

Further, since the group has a lower critical solution temperature of -20°C to 20°C, the plasticizer can change tire performance in a temperature range necessary for a tire. Specifically, the plasticizer functions as a hydrophobic plasticizer at a temperature higher than the lower critical solution temperature of the group, while it functions as a hydrophilic plasticizer at a temperature lower than the lower critical solution temperature of the group. Accordingly, the plasticizer can change tire performance at that boundary temperature range and thus can change tire performance in a temperature range necessary for a tire (for example, from -40 to 40°C).

Moreover, the lower critical solution temperature within the above range can minimize the influence on resins and/or elastomers which are backbone components of tire compositions. Thus, the plasticizer is usable for the preparation of a tire composition.

For example, the plasticizer of the present invention may improve overall performance in terms of fuel economy and wet grip performance.

Herein, the term "plasticizer" refers to a material that imparts plasticity to resins and/or elastomers, and conceptually includes liquid plasticizers (plasticizers which are liquid at 25°C) and solid plasticizers (plasticizers which are solid at 25°C). Specifically, it is a component that can be extracted with acetone from the composition thereof. Such plasticizers may be used alone or in combinations of two or more.

Herein, the group that changes its interaction with respect to an antifreeze with changes in temperature may be any group that changes its interaction with respect to an antifreeze with changes in temperature and is preferably a group that reversibly changes its interaction with respect to an antifreeze with changes in temperature. Specifically, the group may be a group that changes its hydrophilicity with changes in temperature, preferably a group that reversibly changes its hydrophilicity with changes in temperature. More specifically, the group may be a group that changes its hydrophilicity with changes in temperature at relatively low temperatures (preferably within the preferred temperature range of the phase transition temperature of the temperature-responsive polymer described later), preferably a group that reversibly changes its hydrophilicity with changes in temperature at relatively low temperatures (preferably within the preferred temperature range of the phase transition temperature of the temperature-responsive polymer described later).

The group that reversibly changes its interaction (hydrophilicity) with respect to an antifreeze with changes in temperature may be a temperature-responsive polymer (temperature-responsive polymer group). In other words, the plasticizer containing a group that changes its interaction with respect to an antifreeze with changes in temperature may mean a plasticizer containing a group formed of a temperature-responsive polymer, for example. Examples of such plasticizers include plasticizers grafted with temperature-responsive polymers, plasticizers containing temperature-responsive polymer units in the backbone, and plasticizers containing temperature-responsive polymer blocks in the backbone. These may be used alone or in combinations of two or more.

The term "temperature-responsive polymer" refers to a material which in water undergoes reversible changes in the conformation of the polymer chains associated with hydration and dehydration in response to changes in temperature, and thus reversibly changes its hydrophilicity and hydrophobicity with changes in temperature. Such reversible changes are known to be caused by a molecular structure containing in a molecule a hydrophilic group capable of forming a hydrogen bond and a hydrophobic group hardly compatible with water.

Then, the present inventor has found that a temperature-responsive polymer, not only when in water but also when in an antifreeze (i.e., at low temperatures) or composition containing resins and/or elastomers, exhibits reversible changes in hydrophilicity and hydrophobicity with changes in temperature.

Known temperature-responsive polymers include polymers that show a lower critical solution temperature (LCST, also known as lower critical consolute temperature or lower critical dissolution temperature) in water and polymers that show an upper critical solution temperature (UCST, also known as upper critical consolute temperature or upper critical dissolution temperature) in water. These may be used alone or in combinations of two or more.

Here, when in an antifreeze, such a temperature-responsive polymer reversibly changes its hydrophilicity and hydrophobicity at the same temperature as in water. For example, PNIPAM, which shows a LCST of about 32°C in water, shows a LCST of about 32°C in an antifreeze as well.

The polymers that show a LCST become hydrophobic at temperatures higher than the LCST boundary as the intramolecular or intermolecular hydrophobic interaction becomes stronger to cause aggregation of the polymer chains. On the other hand, at temperatures lower than the LCST, they become hydrophilic as the polymer chains are hydrated by binding with water molecules. Thus, the polymers show a reversible phase transition behavior around the LCST.

In contrast, the polymers that show a UCST become hydrophobic and insoluble at temperatures lower than the UCST, while they become hydrophilic and soluble at temperatures higher than the UCST. Thus, the polymers show a reversible phase transition behavior around the UCST. The reason for such a UCST-type behavior is thought to be that intermolecular force can be driven by the hydrogen bonds between the side chains having a plurality of amide groups.

When the group that reversibly changes its interaction with respect to an antifreeze with changes in temperature is a polymer that shows a LCST, temperature changes can cause the polymer to become incompatible with other components in the composition, so that the glass transition temperature can be changed. Thus, it is possible to change tire performance (e.g., wet grip performance, ice grip performance) in response to changes in temperature.

In the plasticizer, the group that reversibly changes its interaction with respect to an antifreeze with changes in temperature is preferably a polymer that shows a LCST. In other words, the group that changes its interaction with respect to an antifreeze with changes in temperature is preferably a group that shows a lower critical solution temperature in an antifreeze.

Herein, the group that shows a lower critical solution temperature (LCST) in an antifreeze refers to a group which is present in a plasticizer and which shows a lower critical solution temperature in an antifreeze when the group is cleaved from the plasticizer and the cleaved group (polymer) is introduced into the antifreeze.

Likewise, herein, the group that shows an upper critical solution temperature (UCST) in an antifreeze refers to a group which is present in a plasticizer and which shows an upper critical solution temperature in an antifreeze when the group is cleaved from the plasticizer and the cleaved group (polymer) is introduced into the antifreeze.

Herein, the term "antifreeze" refers to a liquid consisting of methanol and water which may be prepared by mixing water with methanol in an amount of 9 times the volume of the water at 25°C for 30 minutes.

The group (polymer) that shows a LCST is described below.

The group (polymer) that shows a LCST may include a single group (polymer) or a combination of two or more groups (polymers).

The group (polymer) that shows a LCST may be any group (polymer) that shows a LCST. Preferred are poly(alkyl vinyl ethers), with groups represented by the formula (I) below being more preferred. Also preferred are groups represented by the formula (II) below. In such cases, the advantageous effect tends to be more suitably achieved. These may be used alone or in combinations of two or more.

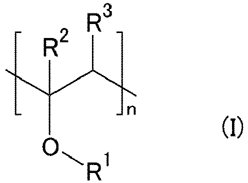

In the formula, n represents an integer of 1 to 1000; and R¹, R², and R³ each independently represent a hydrogen atom or a hydrocarbyl group.

Preferably, n is 3 or larger, more preferably 5 or larger, still more preferably 10 or larger, particularly preferably 20 or larger, but is preferably 500 or smaller, more preferably 300 or smaller, still more preferably 150 or smaller, particularly preferably 80 or smaller, most preferably 40 or smaller, further most preferably 30 or smaller. When n is within the range indicated above, the advantageous effect tends to be better achieved.

The hydrocarbyl group for R¹ may have any number of carbon atoms. The number of carbon atoms is preferably 1 or larger, more preferably 2 or larger, but is preferably 20 or smaller, more preferably 18 or smaller, still more preferably 14 or smaller, particularly preferably 10 or smaller, most preferably 6 or smaller, further most preferably 4 or smaller. When the number of carbon atoms is within the range indicated above, the advantageous effect tends to be better achieved.

The hydrocarbyl group for R² and R³ may have any number of carbon atoms. The number of carbon atoms is preferably 1 or larger, but is preferably 5 or smaller, more preferably 3 or smaller, still more preferably 2 or smaller, particularly preferably 1. When the number of carbon atoms is within the range indicated above, the advantageous effect tends to be better achieved.

Examples of the hydrocarbyl group for R¹, R², and R³ include alkyl groups such as methyl, ethyl, n-propyl, isopropyl, n-butyl, sec-butyl, tert-butyl, n-pentyl, neopentyl, isopentyl, and n-hexyl groups; cycloalkyl groups such as a cyclohexyl group; and aryl groups such as methylphenyl and ethylphenyl groups. Alkyl and cycloalkyl groups are preferred among these, with alkyl groups being more preferred.

Preferably, R¹ is an alkyl group and R² and R³ are hydrogen atoms. More preferably, R¹ is an ethyl group and R² and R³ are hydrogen atoms.

Examples of the groups of formula (I) include poly(methyl vinyl ether), poly(ethyl vinyl ether), poly(propyl vinyl ether), poly(butyl vinyl ether), poly(pentenyl ether), poly(hexyl vinyl ether), poly(heptyl vinyl ether), and poly(octyl ether). These may be used alone or in combinations of two or more. Poly(ethyl vinyl ether) (PEVE) is preferred among these. An extensive study of the present inventor revealed that PEVE shows a LCST of -10°C to +10°C. Thus, when a plasticizer containing a PEVE group which greatly changes its surface properties from hydrophilic to hydrophobic at -10°C to +10°C is used as a plasticizer for resins and/or elastomers, the plasticizer is capable of changing tire performance in a temperature range necessary for a tire and is also usable for the preparation of a tire composition.

Next, the groups of formula (II) are described.

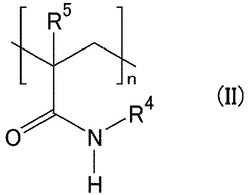

In the formula, n represents an integer of 1 to 1000; R⁴ represents a n-butyl group or a tert-butyl group; and R⁵ represents a hydrogen atom or a hydrocarbyl group.

Preferably, n is 3 or larger, more preferably 5 or larger, still more preferably 10 or larger, particularly preferably 20 or larger, but is preferably 500 or smaller, more preferably 300 or smaller, still more preferably 150 or smaller, particularly preferably 80 or smaller, most preferably 40 or smaller, further most preferably 30 or smaller. When n is within the range indicated above, the advantageous effect tends to be better achieved.

R⁴ is a n-butyl group or a tert-butyl group, preferably a tert-butyl group.

The hydrocarbyl group for R⁵ may have any number of carbon atoms. The number of carbon atoms is preferably 1 or larger, but is preferably 5 or smaller, more preferably 3 or smaller, still more preferably 2 or smaller, particularly preferably 1. When the number of carbon atoms is within the range indicated above, the advantageous effect tends to be better achieved.

Examples of the hydrocarbyl group for R⁵ include those listed for the hydrocarbyl group for R¹, R², and R³. Alkyl groups are preferred among these.

The hydrocarbyl group for R⁵ may be branched or unbranched.

R⁵ is preferably a hydrogen atom or an alkyl group, more preferably a hydrogen atom.

Preferably, R⁴ is a n-butyl group or a tert-butyl group and R⁵ is a hydrogen atom. More preferably, R⁴ is a tert-butyl group and R⁵ is a hydrogen atom.

Examples of the groups of formula (II) include poly(N-n-butylacrylamide), poly(N-tert-butylacrylamide), poly(N-n-butylmethacrylamide), and poly(N-tert-butylmethacrylamide). These may be used alone or in combinations of two or more. Poly(N-n-butylacrylamide) or poly(N-tert-butylacrylamide) is preferred among these. An extensive study of the present inventor revealed that poly(N-n-butylacrylamide) and poly(N-tert-butylacrylamide) show a LCST of -10°C to +10°C. Thus, when a plasticizer containing a poly(N-n-butylacrylamide) or poly(N-tert-butylacrylamide) group which greatly changes its surface properties from hydrophilic to hydrophobic at -10°C to +10°C is used as a plasticizer for resins and/or elastomers, the plasticizer is capable of changing tire performance in a temperature range necessary for a tire and is also usable for the preparation of a tire composition.

Examples of groups that show a LCST other than the above-mentioned groups include copolymers of N-isopropylacrylamide and butyl acrylate, block copolymers of N-isopropylacrylamide and polyethylene oxide, copolymers of N-isopropylacrylamide and fluoromonomers, copolymers of 2-methoxyethyl acrylate and N,N-dimethylacrylamide, biotin-immobilized temperature-responsive magnetic fine particles (fine particles produced by reacting N-acryloylglycinamide, methacrylated magnetic fine particles, and biotin monomers), copolymers of ethylene oxide and propylene oxide, monoaminated products of copolymers of ethylene oxide and propylene oxide, polyethylene oxide-polypropylene oxide-polyethylene oxide block copolymers, maltopentaose-modified polypropylene oxide, copolymers of 2-methoxyethyl acrylate and acryloylmorpholine, copolymers of 2-methoxyethyl acrylate and N-vinylpyrrolidone, copolymers of 2-methoxyethyl acrylate and 2-hydroxyethyl acrylate, copolymers of 2-methoxyethyl acrylate and methoxytriethylene glycol acrylate, poly[2-(2-ethoxyethoxy)ethyl acrylate], poly(2-(2-ethoxyethoxy)ethyl acrylate-co-2-(methoxyethoxy)ethyl methacrylate, copolymers of N-vinylcaprolactam and hydroxyethyl methacrylate, copolymers of methyl vinyl ether and hydroxyethyl methacrylate, poly(1-n-propyl-3-vinyl-2-imidazolidone), poly(N-vinyl-2-imidazolidone compounds), copolymers of 2-hydroxyethyl vinyl ether and vinyl acetate, copolymers of diethylene glycol monovinyl ether and vinyl acetate, magnetic nanoparticles, amino group-containing polystyrenes, and glycoluril polymers. These may be used alone or in combinations of two or more.

Here, the groups each of which changes its interaction with respect to an antifreeze with changes in temperature, the temperature-responsive polymer groups, the groups (polymers) that show a LCST, poly(alkyl vinyl ethers), and the groups of formula (I) preferably exclude the following compound (group):
Polyvinyl methyl ether (poly(methyl vinyl ether)).

Moreover, the plasticizers for resins and/or elastomers containing a group that changes its interaction with respect to an antifreeze with changes in temperature preferably exclude the following plasticizers.
(1) A plasticizer (PNIPAM-PS resin) obtained as described below.
   A nitrogen-purged glass flask is charged with 11.32 g of N-isopropylacrylamide (NIPAM monomer) and then with 25 mL of toluene, followed by stirring at room temperature for 30 minutes to give a homogeneous solution. Subsequently, 1.10 g of 2,2'-azobis(isobutyronitrile) (AIBN) is added to the solution, and the mixture is reacted under reflux for 3 hours. The reaction solution is cooled to 40°C, and then 11.32 g of a styrene-acrylic resin (PS, ARUFON UH-2170 (softening point: 80°C) available from Toagosei Co., Ltd.) and 25 mL of toluene are added to the reaction solution, followed by reacting the mixture under reflux for 3 hours. Then, the toluene solvent is removed from the reaction solution using a rotary evaporator, and the remaining dry solid is dried under reduced pressure at a degree of pressure reduction of 0.1 Pa or less at 80°C for 8 hours.
(2) A plasticizer (PNIPAM-BR) obtained as described below.
   A nitrogen-purged glass flask is charged with 11.32 g of N-isopropylacrylamide (NIPAM monomer) and then with 25 mL of toluene, followed by stirring at room temperature for 30 minutes to give a homogeneous solution. Subsequently, 1.10 g of 2,2'-azobis(isobutyronitrile) (AIBN) is added to the solution, and the mixture is reacted under reflux for 3 hours. The reaction solution is cooled to 40°C, and then 11.32 g of maleic acid-modified liquid polybutadiene (Ricon 130MA8 (maleic acid-modified liquid BR, Mw: 2700) available from Cray Valley) and 25 mL of toluene are added to the reaction solution, followed by reacting the mixture under reflux for 3 hours. Then, the toluene solvent is removed from the reaction solution using a rotary evaporator, and the remaining dry solid is dried under reduced pressure at a degree of pressure reduction of 0.1 Pa or less at 80°C for 8 hours.

Moreover, the groups each of which changes its interaction with respect to an antifreeze with changes in temperature, the temperature-responsive polymer groups, and the groups (polymers) that show a LCST preferably exclude the following compounds (groups):
groups represented by the following formula (A): 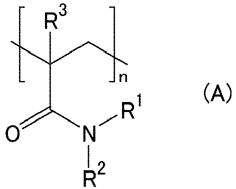 wherein n represents an integer of 1 to 1000; and R¹, R², and R³ each independently represent a hydrogen atom or a hydrocarbyl group, provided that at least one of R¹ or R² is not a hydrogen atom, and R¹ and R² together may form a ring structure;
poly(N-vinyl-caprolactam) represented by the formula (II) below;
poly(2-alkyl-2-oxazolines) represented by the formula (III) ;
alkyl-substituted celluloses;
poly(N-ethoxyethylacrylamide);
poly(N-ethoxyethylmethacrylamide);
poly(N-tetrahydrofurfurylacrylamide);
poly(N-tetrahydrofurfurylmethacrylamide);
polyvinyl methyl ether;
poly[2-(dimethylamino)ethyl methacrylate];
poly(3-ethyl-N-vinyl-2-pyrrolidone);
hydroxybutyl chitosan;
polyoxyethylene (20) sorbitan monostearate;
polyoxyethylene (20) sorbitan monolaurate;
polyoxyethylene (20) sorbitan monooleate;
poly(ethylene glycol) methacrylate containing 2 to 6 ethylene glycol units;
polyethylene glycol-co-polypropylene glycol;
ethoxylated iso-C₁₃H₂₇-alcohols;
polyethylene glycol containing 4 to 50 ethylene glycol units;
polypropylene glycol containing 4 to 30 polypropylene glycol units;
monomethyl, dimethyl, monoethyl, or diethyl ethers of polyethylene glycol containing 4 to 50 ethylene glycol units;
monomethyl, dimethyl, monoethyl, or diethyl ethers of polypropylene glycol containing 4 to 50 propylene glycol units.

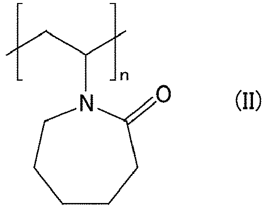

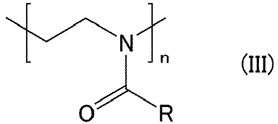

In formulas (II) and (III), n is as defined for n in formula (A). In formula (III), R is an alkyl group selected from a n-propyl group, an isopropyl group, or an ethyl group.

Moreover, the groups each of which changes its interaction with respect to an antifreeze with changes in temperature, the temperature-responsive polymer groups, and the groups (polymers) that show a LCST preferably exclude the following compounds (groups):
poly(N-substituted (meth)acrylamides);
poly(N-vinyl-caprolactam) represented by the formula (II) below;
poly(2-alkyl-2-oxazolines) represented by the formula (III) below;
alkyl-substituted celluloses;
poly(N-ethoxyethylacrylamide);
poly(N-ethoxyethylmethacrylamide);
poly(N-tetrahydrofurfurylacrylamide);
poly(N-tetrahydrofurfurylmethacrylamide);
polyvinyl methyl ether;
poly[2-(dimethylamino)ethyl methacrylate];
poly(3-ethyl-N-vinyl-2-pyrrolidone);
hydroxybutyl chitosan;
polyoxyethylene (20) sorbitan monostearate;
polyoxyethylene (20) sorbitan monolaurate;
polyoxyethylene (20) sorbitan monooleate;
poly(ethylene glycol) methacrylate containing 2 to 6 ethylene glycol units;
polyethylene glycol-co-polypropylene glycol;
ethoxylated iso-C₁₃H₂₇-alcohols;
polyethylene glycol containing 4 to 50 ethylene glycol units;
polypropylene glycol containing 4 to 30 polypropylene glycol units;
monomethyl, dimethyl, monoethyl, or diethyl ethers of polyethylene glycol containing 4 to 50 ethylene glycol units;
monomethyl, dimethyl, monoethyl, or diethyl ethers of polypropylene glycol containing 4 to 50 propylene glycol units.

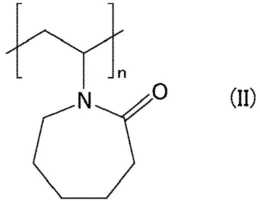

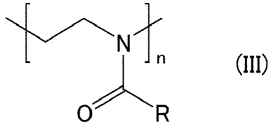

In formulas (II) and (III), n is as defined for n in formula (A). In formula (III), R is an alkyl group selected from a n-propyl group, an isopropyl group, or an ethyl group.

The weight average molecular weight of the group that changes its interaction with respect to an antifreeze with changes in temperature (the group formed of a temperature-responsive polymer) is preferably 50 or more, more preferably 560 or more, still more preferably 1130 or more, but is preferably 57000 or less, more preferably 34000 or less, still more preferably 17000 or less. When the weight average molecular weight is within the range indicated above, the advantageous effect tends to be better achieved.

The phase transition temperature (lower critical solution temperature (LCST) or upper critical solution temperature (UCST), particularly LCST) of the temperature-responsive polymer is at least -20°C but not higher than 20°C, preferably not higher than 10°C. When the phase transition temperature is within the range indicated above, the advantageous effect tends to be better achieved.

Herein, the phase transition temperature of the temperature-responsive polymer may be easily determined by preparing a 1 mass% polymer/antifreeze solution from a 90 v/v% aqueous methanol solution (antifreeze), storing the prepared solution for at least one hour in a freezer at a predetermined temperature (for example, -20°C) or a refrigerator at a predetermined temperature (for example, +5°C), and then observing the turbidity of the solution at each temperature.

Here, the temperature-responsive polymer refers to a temperature-responsive polymer group (temperature-responsive polymer) cleaved from a plasticizer containing the temperature-responsive polymer group.

Moreover, the 90 v/v% aqueous methanol solution is a liquid consisting of methanol and water which may be prepared by mixing water with methanol in an amount of 9 times the volume of the water at 25°C for 30 minutes.

The amount of the group(s) that changes its interaction with respect to an antifreeze with changes in temperature (the group(s) formed of a temperature-responsive polymer) based on 100% by mass of the plasticizer is preferably 0.1% by mass or more, more preferably 1% by mass or more, still more preferably 5% by mass or more, particularly preferably 10% by mass or more, most preferably 20% by mass or more, even most preferably 30% by mass or more, further most preferably 40% by mass or more, but is preferably 99% by mass or less, more preferably 80% by mass or less, still more preferably 70% by mass or less, particularly preferably 60% by mass or less, most preferably 50% by mass or less. When the amount is within the range indicated above, the advantageous effect tends to be better achieved.

As described above, the term "plasticizer containing a group that changes its interaction with respect to an antifreeze with changes in temperature" refers to, for example, a plasticizer containing a group formed of a temperature-responsive polymer, i.e., a plasticizer to which a group formed of a temperature-responsive polymer is bound.

Specifically, the plasticizer containing a group that changes its interaction with respect to an antifreeze with changes in temperature may be an oil, an ester plasticizer, or a liquid or solid resin (hereinafter, also collectively referred to as "oil or the like"), which contains a group formed of a temperature-responsive polymer. These may be used alone or in combinations of two or more.

Conventionally used oils or the like generally do not contain a group formed of a temperature-responsive polymer.

Thus, the plasticizer may be a commercial product, if any, or may be produced by known synthesis techniques. For example, the plasticizer may be produced with reference to JP 2005-314419 A, JP 2016-505679 T, JP 2015-531672 T, JP 2003-252936 A, JP 2004-307523 A, etc.

An exemplary method for producing the plasticizer may include synthesizing the plasticizer by a known method using a monomer component capable of forming a temperature-responsive polymer unit. For example, once ethyl vinyl ether (EVE), which is a monomer constituting PEVE (a temperature-responsive polymer), is added to a plasticizer polymerized by cationic polymerization, the addition of the temperature-responsive polymer PEVE to the plasticizer structure can be confirmed by an increase in molecular weight.

Another exemplary method for producing the plasticizer may include radically polymerizing and reacting PEVE with a plasticizer component which can be radically added thereto according to a known method to synthesize a PEVE-added plasticizer. In other words, the plasticizer may be synthesized from a monomer component capable of forming a temperature-responsive polymer unit. Thus, it is possible to produce a plasticizer having a temperature-responsive polymer unit in the backbone.

For example, in order to produce a plasticizer having a PEVE unit in the backbone, ethyl vinyl ether, which is a monomer constituting PEVE, as a monomer component may be stirred with a radical generator such as AIBN to perform radical polymerization, followed by a radical addition reaction with a liquid or solid resin having a radically reactable double bond or carboxylic acid group to produce a resin having a PEVE unit in the backbone.

Moreover, as a random copolymer or a block copolymer may be produced by appropriately modulating the polymerization method, such a technique may also be used to produce a plasticizer containing a temperature-responsive polymer block in the backbone.

The ends of a temperature-responsive polymer are described.

In the case of a plasticizer to which a temperature-responsive polymer is added, one end of the temperature-responsive polymer forms the backbone or a bond to the backbone, and the other end is usually a hydrogen atom but may be bound to a polymerization initiator such as azobisisobutyronitrile (AIBN).

In the case of a plasticizer containing a temperature-responsive polymer unit in the backbone or a plasticizer containing a temperature-responsive polymer block in the backbone, either end of the temperature-responsive polymer forms another structural unit or a bond to another structural unit. When a temperature-responsive polymer unit (temperature-responsive polymer block) is present at the molecular end, one end is usually a hydrogen atom but may be bound to a polymerization initiator such as azobisisobutyronitrile (AIBN).

The following describes an oil, ester plasticizer, or liquid or solid resin (also collectively referred to as "oil or the like") into which the group that changes its interaction with respect to an antifreeze with changes in temperature (the group formed of a temperature-responsive polymer) is to be introduced. These may be used alone or in combinations of two or more. The oil or the like into which the above-mentioned group is to be introduced is not limited as long as it has plasticity. Examples include those commonly used as compounding ingredients for tires. The oil or the like into which the above-mentioned group is to be introduced is preferably an oil or a liquid or solid resin, more preferably a liquid or solid resin, still more preferably a solid resin.

Any oil may be used, and examples include conventional oils, including process oils such as paraffinic process oils, aromatic process oils, and naphthenic process oils; low polycyclic aromatic (PCA) process oils such as TDAE and MES; vegetable oils; and mixtures of the foregoing. These may be used alone or in combinations of two or more. Aromatic process oils are preferred among these. Specific examples of the aromatic process oils include Diana Process Oil AH series available from Idemitsu Kosan Co., Ltd.

Examples of commercial oils include those available from Idemitsu Kosan Co., Ltd., Sankyo Yuka Kogyo K.K., Japan Energy Corporation, Olisoy, H&R, Hokoku Corporation, Showa Shell Sekiyu K.K., Fuji Kosan Co., Ltd., etc.

Examples of ester plasticizers include the vegetable oils mentioned above; synthetic plasticizers and processed vegetable oils, such as glycerol fatty acid monoesters, glycerol fatty acid diesters, and glycerol fatty acid triesters; and phosphoric acid esters (e.g., phosphate plasticizers, and mixtures thereof). These may be used alone or in combinations of two or more.

Suitable examples of the ester plasticizers include fatty acid esters represented by the following formula: 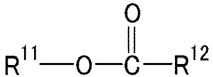 wherein R¹¹ represents a C1-C8 linear or branched alkyl group, a C1-C8 linear or branched alkenyl group, or a C2-C6 linear or branched alkyl group substituted with 1 to 5 hydroxy groups; and R¹² represents a C11-C21 alkyl or alkenyl group.

Examples of R¹¹ include methyl, ethyl, 2-ethylhexyl, isopropyl, and octyl groups, and groups obtained by substituting these groups with 1 to 5 hydroxy groups. Examples of R¹² include linear or branched alkyl or alkenyl groups such as lauryl, myristyl, palmityl, stearyl, and oleyl groups.

Examples of the fatty acid esters include alkyl oleates, alkyl stearates, alkyl linoleates, and alkyl palmitates. Alkyl oleates (e.g., methyl oleate, ethyl oleate, 2-ethylhexyl oleate, isopropyl oleate, octyl oleate) are preferred among these. In this case, the amount of alkyl oleates based on 100% by mass of the amount of fatty acid esters is preferably 80% by mass or more.

Other examples of the fatty acid esters include fatty acid monoesters or diesters formed from fatty acids (e.g., oleic acid, stearic acid, linoleic acid, palmitic acid) and alcohols (e.g., ethylene glycol, glycerol, trimethylolpropane, pentaerythritol, erythritol, xylitol, sorbitol, dulcitol, mannitol, inositol). Oleic acid monoesters are preferred among these. In this case, the amount of oleic acid monoesters based on 100% by mass of the combined amount of fatty acid monoesters and fatty acid diesters is preferably 80% by mass or more.

Phosphoric acid esters can be suitably used as ester plasticizers.

Preferred phosphoric acid esters include C12-C30 compounds, among which C12-C30 trialkyl phosphates are suitable. Here, the number of carbon atoms of the trialkyl phosphates means the total number of carbon atoms in the three alkyl groups. The three alkyl groups may be the same or different groups. Examples of the alkyl groups include linear or branched alkyl groups which may contain a heteroatom such as an oxygen atom or may be substituted with a halogen atom such as fluorine, chlorine, bromine, or iodine.

Other examples of the phosphoric acid esters include known phosphoric acid ester plasticizers such as: mono-, di-, or triesters of phosphoric acid with C1-C12 monoalcohols or their (poly)oxyalkylene adducts; and compounds obtained by substituting one or two alkyl groups of the aforementioned trialkyl phosphoates with phenyl group(s). Specific examples include tris(2-ethylhexyl)phosphate, trimethyl phosphate, triethyl phosphate, tributyl phosphate, trioctyl phosphate, triphenyl phosphate, tricresyl phosphate, trixylenyl phosphate, cresyl diphenyl phosphate, 2-ethylhexyl diphenyl phosphate, and tris(2-butoxyethyl)phosphate.

Examples of solid resins include resins which are solid at 25°C such as terpene resins (including rosin resins), styrene resins, C5 resins, C9 resins, C5/C9 resins, coumarone indene resins (including resins based on coumarone or indene alone), olefin resins, urethane resins, acrylic resins, p-t-butylphenol acetylene resins, and dicyclopentadiene resins (DCPD resins). These resins may be hydrogenated. These may be used alone or in admixtures of two or more. Moreover, the resins themselves may be copolymers of monomer components of different origins. Styrene resins and terpene resins are preferred among these, with styrene resins being more preferred.

Examples of commercial solid resins include those available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JXTG Nippon Oil & Energy Corporation, Arakawa Chemical Industries, Ltd., Taoka Chemical Co., Ltd., etc.

The softening point of the solid resins is preferably 30°C or higher, more preferably 60°C or higher, still more preferably 80°C or higher, but is preferably 200°C or lower, more preferably 160°C or lower, still more preferably 140°C or lower, particularly preferably 120°C or lower. When the softening point is within the range indicated above, the advantageous effect tends to be more suitably achieved.

Herein, the softening point of the resins is determined as set forth in JIS K 6220-1:2001 using a ring and ball softening point measuring apparatus and defined as the temperature at which the ball drops down.

The terpene resins may be any resin that contains a unit derived from a terpene compound, and examples include polyterpenes (resins produced by polymerization of terpene compounds), terpene aromatic resins (resins produced by copolymerization of terpene compounds and aromatic compounds), and aromatic modified terpene resins (resins obtained by modification of terpene resins with aromatic compounds). Polyterpenes are preferred among these.

The terpene compounds refer to hydrocarbons having a composition represented by (C₅H₈)ₙ or oxygen-containing derivatives thereof, each of which has a terpene backbone and is classified as, for example, a monoterpene (C₁₀H₁₆), sesquiterpene (C₁₅H₂₄) , or diterpene (C₂₀H₃₂). Examples of the terpene compounds include α-pinene, β-pinene, dipentene, limonene, myrcene, allocimene, ocimene, α-phellandrene, α-terpinene, γ-terpinene, terpinolene, 1,8-cineole, 1,4-cineole, α-terpineol, β-terpineol, and γ-terpineol. Other examples of the terpene compounds include resin acids (rosin acids) such as abietic acid, neoabietic acid, palustric acid, levopimaric acid, pimaric acid, and isopimaric acid. In other words, the terpene resins include rosin resins formed mainly of rosin acids produced by processing pine resin. Here, examples of the rosin resins include natural rosin resins (polymerized rosins) such as gum rosins, wood rosins, and tall oil rosins; modified rosin resins such as maleic acid-modified rosin resins and rosin-modified phenol resins; rosin esters such as rosin glycerol esters; and disproportionated rosin resins obtained by disproportionation of rosin resins.

Preferred among the terpene compounds are α-pinene and β-pinene, with β-pinene being more preferred. Thus, preferred among the polyterpenes are poly(α-pinene) and poly(β-pinene), with poly(β-pinene) being more preferred.

The aromatic compounds may be any compound having an aromatic ring. Examples include phenol compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; and styrene and styrene derivatives such as alkylstyrenes, alkoxystyrenes, and unsaturated hydrocarbon group-containing styrenes. Styrene is preferred among these.

The styrene resins refer to polymers formed from styrene monomers as structural monomers, and examples include polymers polymerized from styrene monomers as main components (50% by mass or higher, preferably 80% by mass or higher). Specific examples include homopolymers polymerized from single styrene monomers (e.g., styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene), copolymers copolymerized from two or more styrene monomers, and copolymers of styrene monomers with additional monomers copolymerizable therewith. Homopolymers polymerized from single styrene monomers are preferred among these.

Examples of the additional monomers include acrylonitriles such as acrylonitrile and methacrylonitrile; unsaturated carboxylic acids such as acrylic and methacrylic acid; unsaturated carboxylic acid esters such as methyl acrylate and methyl methacrylate; dienes such as chloroprene, butadiene, and isoprene; olefins such as 1-butene and 1-pentene; and α,β-unsaturated carboxylic acids and acid anhydrides thereof such as maleic anhydride.

Preferred among the styrene resins are homopolymers polymerized from single styrene monomers. More preferred are styrene homopolymers, o-methylstyrene homopolymers, m-methylstyrene homopolymers, p-methylstyrene homopolymers, and α-methylstyrene homopolymers, with styrene homopolymers or α-methylstyrene homopolymers being still more preferred.

Also preferred among the styrene resins are α-methylstyrene resins (e.g., α-methylstyrene homopolymers, copolymers of α-methylstyrene and styrene)

Liquid resins may be used which have a structure similar to that of the solid resins and also have a low softening point. Examples include resins which are liquid at 25°C such as terpene resins (including rosin resins), styrene resins, C5 resins, C9 resins, C5/C9 resins, coumarone indene resins (including resins based on coumarone or indene alone), olefin resins, urethane resins, acrylic resins, p-t-butylphenol acetylene resins, and dicyclopentadiene resins (DCPD resins). These resins may be hydrogenated. These may be used alone or in admixtures of two or more. Moreover, the resins themselves may be copolymers of monomer components of different origins. Styrene resins are preferred among these. Preferred embodiments of the styrene resins are as described for the styrene resins as the solid resins. In other words, the preferred embodiments are as described for the styrene resins as the solid resins, except that they have a different molecular weight.

Further, examples of other liquid resins include liquid (meaning liquid at 25°C, hereinafter the same) farnesene polymers such as liquid farnesene homopolymers, liquid farnesene-styrene copolymers, liquid farnesene-butadiene copolymers, liquid farnesene-styrene-butadiene copolymers, liquid farnesene-isoprene copolymers, and liquid farnesene-styrene-isoprene copolymers; liquid myrcene polymers such as liquid myrcene homopolymers, liquid myrcene-styrene copolymers, liquid myrcene-butadiene copolymers, liquid myrcene-styrene-butadiene copolymers, liquid myrcene-isoprene copolymers, and liquid myrcene-styrene-isoprene copolymers; liquid diene polymers such as liquid styrene butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers); liquid olefin polymers containing an olefin resin (e.g., polyethylene, polypropylene) as a hard segment (hard phase) and a rubber component as a soft segment (soft phase); and liquid ester polymers containing a polyester as a hard segment and a polyether, polyester, or the like as a soft segment. These may be modified at the chain end or backbone by a polar group. These may be used alone or in combinations of two or more. Liquid BR is preferred among these.

The weight average molecular weight of the liquid resins is preferably less than 100,000, more preferably 80,000 or less, still more preferably 50,000 or less, but is preferably 500 or more, more preferably 2,000 or more. When the weight average molecular weight is within the range indicated above, the advantageous effect tends to be better achieved.

Examples of commercial liquid resins include those available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JXTG Nippon Oil & Energy Corporation, Arakawa Chemical Industries, Ltd., Taoka Chemical Co., Ltd., Sartomer, Kuraray Co., Ltd., etc.

The plasticizer containing a group that changes its interaction with respect to an antifreeze with changes in temperature is preferably a plasticizer containing a group that shows a lower critical solution temperature in an antifreeze, more preferably a plasticizer containing a poly(alkyl vinyl ether), still more preferably a plasticizer containing a group of formula (I), particularly preferably a plasticizer containing poly(ethyl vinyl ether). The plasticizer is also preferably a plasticizer containing a group of formula (II).

Moreover, in the plasticizer, the group is preferably introduced into a solid resin or a liquid resin, more preferably into a solid resin. The solid resin is more preferably a styrene resin or a terpene resin (preferably a styrene resin), still more preferably a styrene homopolymer, an α-methylstyrene homopolymer, or a polyterpene (preferably a styrene homopolymer or an α-methylstyrene homopolymer). The liquid resin is more preferably a styrene resin or a liquid polybutadiene polymer (liquid BR).

The plasticizer containing a group that changes its interaction with respect to an antifreeze with changes in temperature is a plasticizer for resins and/or elastomers.

The resins to which the plasticizer may be applied are not limited. Examples include, in addition to the above-mentioned resins, thermoplastic resins such as polycarbonate resins, polyester resins, polyester carbonate resins, polyphenylene ether resins, polyphenylene sulfide resins, polysulfone resins, polyether sulfone resins, polyarylene resins, polyamide resins, polyether imide resins, polyacetal resins, polyvinyl acetal resins, polyketone resins, polyether ketone resins, polyether ether ketone resins, polyaryl ketone resins, polyether nitrile resins, liquid crystal resins, polybenzimidazole resins, polyparabanic acid resins, polyolefin resins, vinyl chloride resins, and cellulose resins; and thermosetting resins such as epoxy resins, polyamide imide resins, thermosetting polyester resins (unsaturated polyester resins), silicone resins, urethane resins, (meth)acrylic resins, fluorine resins, phenol resins, urea resins, melamine resins, polyimide resins, alkyd resins, polyvinyl ester resins, polydiallyl phthalate resins, bismaleimide-triazine resins, furan resins, xylene resins, guanamine resins, maleic resins, and polyether resins. These may be used alone or in combinations of two or more.

The elastomers to which the plasticizer may be applied are not limited. Examples include diene rubbers commonly used as rubber components of tire compositions, such as isoprene-based rubbers, polybutadiene rubbers (BR), styrene-butadiene rubbers (SBR), styrene-isoprene-butadiene rubbers (SIBR), ethylene-propylene-diene rubbers (EPDM), chloroprene rubbers (CR), and acrylonitrile butadiene rubbers (NBR); acrylic rubbers such as butyl acrylate rubber, ethyl acrylate rubber, and octyl acrylate rubber; nitrile rubbers, isobutylene rubbers, methyl methacrylate-butyl acrylate block copolymers, ethylene-propylene copolymers (EPR), chlorosulfonated polyethylenes, silicone rubbers (millable type, room temperature vulcanizing type), butyl rubbers, fluororubbers, olefin-based thermoplastic elastomers, styrene-based thermoplastic elastomers, vinyl chloride-based thermoplastic elastomers, urethane-based thermoplastic elastomers, polyamide-based thermoplastic elastomers, polyester-based thermoplastic elastomers, fluorine-based thermoplastic elastomers, styrene-isobutylene-styrene block copolymers (SIBS), styrene-isoprene-styrene block copolymers (SIS), styrene-isobutylene block copolymers (SIB), styrene-butadiene-styrene block copolymers (SBS), styrene-ethylene/butene-styrene block copolymers (SEBS), styrene-ethylene/propylene-styrene block copolymers (SEPS), styrene-ethylene/ethylene/propylene-styrene block copolymers (SEEPS), and styrene-butadiene/butylene-styrene block copolymers (SBBS). These may be used alone or in combinations of two or more.

Preferred among the resins and elastomers to which the plasticizer may be applied are rubbers, with diene rubbers being more preferred, with isoprene-based rubbers, BR, and SBR being still more preferred.

### (Composition)

Next, a composition containing the plasticizer (plasticizer containing a group that changes its interaction with respect to an antifreeze with changes in temperature) is described.

Here, the plasticizer contained in the composition may be identified by the following method, for example.

The compound may be identified by continuously extracting 100 mg of the composition with tetrahydrofuran solvent at room temperature for 24 hours using a Soxhlet extractor, and separating the extraction residue based on the molecular weight by gel permeation chromatography (GPC) or liquid chromatography-mass spectrometry (LC-MS), followed by analysis by NMR.

The amount of the above-described plasticizer(s) per 100 parts by mass of the polymer component content (preferably per 100 parts by mass of the rubber component content) in the composition is preferably 0.1 parts by mass or more, more preferably 1 part by mass or more, still more preferably 3 parts by mass or more, particularly preferably 5 parts by mass or more, most preferably 10 parts by mass or more, further most preferably 20 parts by mass or more, but is preferably 200 parts by mass or less, more preferably 100 parts by mass or less, still more preferably 80 parts by mass or less, particularly preferably 60 parts by mass or less, most preferably 50 parts by mass or less. When the amount is within the range indicated above, the advantageous effect tends to be better achieved.

The above-described plasticizer may be used together with plasticizers other than the above-described plasticizers. Examples of such plasticizers other than the above-described plasticizers include the above-mentioned oils or the like into which the above-described group is to be introduced. These may be used alone or in combinations of two or more.

The total amount of plasticizers (the combined amount of the above-described plasticizers and plasticizers other than the above-described plasticizers) is as described for the amount of the above-described plasticizers.

Here, the amount of plasticizers includes the amount of the plasticizers contained in the rubbers (oil extended rubbers) or sulfur (oil-containing sulfur), if used.

Examples of polymer components that may be used in the composition include the above-mentioned resins and elastomers to which the above-described plasticizer may be applied. These may be used alone or in combinations of two or more. Rubbers are preferred among these, with diene rubbers being more preferred, with isoprene-based rubbers, BR, and SBR being still more preferred.

Here, the polymer components (preferably the rubber components) are preferably polymers (rubbers) having a weight average molecular weight (Mw) of 200,000 or more, more preferably 350,000 or more. The upper limit of the Mw is not limited, but is preferably 4,000,000 or less, more preferably 3,000,000 or less.

Herein, the Mw and the number average molecular weight (Mn) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

The amount of diene rubbers based on 100% by mass of the polymer component content (preferably based on 100% by mass of the rubber component content) is preferably 20% by mass or more, more preferably 50% by mass or more, still more preferably 70% by mass or more, particularly preferably 80% by mass or more, most preferably 90% by mass or more, and may be 100% by mass. When the amount is within the range indicated above, the advantageous effect tends to be better achieved.

The polymer components may be either unmodified or modified polymers.

The modified polymers may be any polymer (preferably any diene rubber) having a functional group interactive with a filler such as silica. Examples include chain end-modified polymers obtained by modifying at least one chain end of a polymer by a compound (modifier) having the functional group (i.e., chain end-modified polymers terminated with the functional group); backbone-modified polymers having the functional group in the backbone; backbone- and chain end-modified polymers having the functional group in both the backbone and chain end (e.g., backbone- and chain end-modified polymers in which the backbone has the functional group and at least one chain end is modified by the modifier); and chain end-modified polymers into which a hydroxy or epoxy group has been introduced by modification (coupling) with a polyfunctional compound having two or more epoxy groups in the molecule.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. Here, these functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Any SBR may be used. Examples include emulsion-polymerized styrene-butadiene rubbers (E-SBR) and solution-polymerized styrene-butadiene rubbers (S-SBR). These may be used alone or in combinations of two or more.

The styrene content of the SBR is preferably 5% by mass or higher, more preferably 10% by mass or higher, still more preferably 15% by mass or higher, particularly preferably 20% by mass or higher, most preferably 25% by mass or higher. The styrene content is also preferably 60% by mass or lower, more preferably 50% by mass or lower, still more preferably 45% by mass or lower, particularly preferably 40% by mass or lower, most preferably 35% by mass or lower. When the styrene content is within the range indicated above, the advantageous effect tends to be better achieved.

Herein, the styrene content of the SBR can be determined by ¹H-NMR analysis.

SBR products manufactured or sold by Sumitomo Chemical Co., Ltd., JSR Corporation, Asahi Kasei Corporation, Zeon Corporation, etc. may be used as the SBR.

The SBR may be either unmodified or modified SBR. Examples of the modified SBR include those into which functional groups as listed for the modified polymers have been introduced. Modified SBR is preferred among these.

Any BR may be used. Examples include high-cis BR having a high cis content, BR containing syndiotactic polybutadiene crystals, and BR synthesized using rare earth catalysts (rare earth-catalyzed BR). These may be used alone or in combinations of two or more. In particular, high-cis BR having a cis content of 90% by mass or higher is preferred in order to improve abrasion resistance.
Here, the cis content can be measured by infrared absorption spectrometry.

Moreover, the BR may be either unmodified or modified BR. Examples of the modified BR include those into which functional groups as listed for the modified polymers have been introduced.

Examples of commercial BR include those available from Ube Industries, Ltd., JSR Corporation, Asahi Kasei Corporation, Zeon Corporation, etc.

Examples of isoprene-based rubbers include natural rubbers (NR), polyisoprene rubbers (IR), refined NR, modified NR, and modified IR. Examples of NR include those commonly used in the tire industry such as SIR20, RSS#3, and TSR20. Any IR may be used, including for example those commonly used in the tire industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. These may be used alone or in combinations of two or more. NR is preferred among these.

The amount of SBR based on 100% by mass of the polymer component content (preferably based on 100% by mass of the rubber component content) is preferably 1% by mass or more, more preferably 10% by mass or more, still more preferably 40% by mass or more, particularly preferably 60% by mass or more. The amount may be 100% by mass, but is preferably 90% by mass or less, more preferably 80% by mass or less. When the amount is within the range indicated above, the advantageous effect tends to be better achieved.

The amount of BR based on 100% by mass of the polymer component content (preferably based on 100% by mass of the rubber component content) is preferably 1% by mass or more, more preferably 5% by mass or more, still more preferably 10% by mass or more. The amount may be 100% by mass, but is preferably 80% by mass or less, more preferably 50% by mass or less, still more preferably 30% by mass or less. When the amount is within the range indicated above, the advantageous effect tends to be better achieved.

The amount of isoprene-based rubbers based on 100% by mass of the polymer component content (preferably based on 100% by mass of the rubber component content) is preferably 1% by mass or more, more preferably 2% by mass or more, still more preferably 3% by mass or more, particularly preferably 4% by mass or more, most preferably 10% by mass or more. The amount may be 100% by mass, but is preferably 80% by mass or less, more preferably 50% by mass or less, still more preferably 30% by mass or less. When the amount is within the range indicated above, the advantageous effect tends to be better achieved.

Moreover, a multi-component copolymer containing a conjugated diene unit, a non-conjugated olefin unit, and an aromatic vinyl unit is preferably present as a rubber component. In this case, the advantageous effect tends to be more suitably achieved.

The conjugated diene unit in the multi-component copolymer is a structural unit derived from a conjugated diene compound. Examples of the conjugated diene compound include 1,3-butadiene, isoprene, 1,3-pentadiene, 2,3-dimethylbutadiene, 2-phenyl-1,3-butadiene, and 1,3-hexadiene. These may be used alone or in combinations of two or more. Preferred are 1,3-butadiene and isoprene, with 1,3-butadiene being more preferred.

The non-conjugated olefin unit in the multi-component copolymer is a structural unit derived from a non-conjugated olefin. Examples of the non-conjugated olefin include ethylene, propylene, 1-butene, 1-pentene, 1-hexene, 1-heptene, and 1-octene. These may be used alone or in combinations of two or more. Preferred are ethylene, propylene, and 1-butene, with ethylene being more preferred.

The aromatic vinyl unit in the multi-component copolymer is a structural unit derived from an aromatic vinyl compound. Examples of the aromatic vinyl compound include styrene, α-methylstyrene, 1-vinylnaphthalene, 3-vinyltoluene, ethylvinylbenzene, divinylbenzene, 4-cyclohexylstyrene, and 2,4,6-trimethylstyrene. These may be used alone or in combinations of two or more. Preferred are styrene and α-methylstyrene, with styrene being more preferred.

For example, the multi-component copolymer may be prepared by copolymerizing a conjugated diene compound, a non-conjugated olefin, and an aromatic vinyl compound, or by copolymerizing a combination of a conjugated diene compound and an aromatic vinyl compound or a combination of a conjugated diene compound, a non-conjugated olefin, and an aromatic vinyl compound, and then hydrogenating the copolymer to convert some conjugated diene units to non-conjugated olefin units. In other words, the multi-component copolymer may be a copolymer of a conjugated diene compound, a non-conjugated olefin, and an aromatic vinyl compound, or may be a hydrogenated product (hydrogenated copolymer) of a copolymer of a conjugated diene compound and an aromatic vinyl compound or a copolymer of a conjugated diene compound, a non-conjugated olefin, and an aromatic vinyl compound. Each of these copolymers may be used alone, or two or more of these may be used in combination. Among these, the multi-component copolymer is preferably a hydrogenated product of a copolymer of a conjugated diene compound and an aromatic vinyl compound, more preferably a hydrogenated styrene-butadiene copolymer (hydrogenated SBR).

The multi-component copolymer may be prepared by any polymerization method such as random polymerization or block polymerization, preferably by random polymerization.

When the multi-component copolymer is a hydrogenated copolymer, the hydrogenation may be performed by any method under any reaction condition, including known methods and known conditions. Usually, the hydrogenation is performed at 20 to 150°C under an elevated hydrogen pressure of 0.1 to 10 MPa in the presence of a hydrogenation catalyst. Other methods and conditions related to production processes are not limited either, and, for example, those described in WO 2016/039005 above may be used.

When the multi-component copolymer is a hydrogenated copolymer, the degree of hydrogenation based on 100 mol% of the total conjugated diene units before hydrogenation is preferably 65 mol% or higher, more preferably 70 mol% or higher, still more preferably 80 mol% or higher, but is preferably 95 mol% or lower, more preferably 94.5 mol% or lower, still more preferably 94 mol% or lower. When the degree of hydrogenation is within the range indicated above, the advantageous effect tends to be better achieved.

Here, the degree of hydrogenation can be calculated from the rate of decrease in the unsaturated bond signals in the ¹H-NMR spectrum measured.

The conjugated diene unit content based on 100 mol% of the total structural units of the multi-component copolymer is preferably 1.9 mol% or higher, more preferably 2.4 mol% or higher, still more preferably 2.9 mol% or higher, but is preferably 23.7 mol% or lower, more preferably 16.9 mol% or lower, still more preferably 10.7 mol% or lower. When the content is within the range indicated above, the advantageous effect tends to be better achieved.

The non-conjugated olefin unit content based on 100 mol% of the total structural units of the multi-component copolymer is preferably higher than 65 mol%, more preferably 70 mol% or higher, still more preferably 80 mol% or higher, but is preferably lower than 95 mol%, more preferably 94.5 mol% or lower, still more preferably 94 mol% or lower. When the content is within the range indicated above, the advantageous effect tends to be better achieved.

The aromatic vinyl unit content based on 100 mol% of the total structural units of the multi-component copolymer is preferably 4 mol% or higher, more preferably 8 mol% or higher, but is preferably 45 mol% or lower, more preferably 40 mol% or lower, still more preferably 35 mol% or lower, particularly preferably 25 mol% or lower, most preferably 20 mol% or lower. When the content is within the range indicated above, the advantageous effect tends to be better achieved.

The structural unit contents of the multi-component copolymer are measured by NMR.

The weight average molecular weight (Mw) of the multi-component copolymer is preferably 100,000 or more, more preferably 150,000 or more, still more preferably 200,000 or more, particularly preferably 400,000 or more, but is preferably 2,000,000 or less, more preferably 1,500,000 or less, still more preferably 1,000,000 or less, particularly preferably 600,000 or less. When the Mw is within the range indicated above, the advantageous effect tends to be better achieved.

The amount of the multi-component copolymer(s) based on 100% by mass of the rubber component content is preferably 1% by mass or more, more preferably 10% by mass or more, still more preferably 40% by mass or more, particularly preferably 60% by mass or more. The amount may be 100% by mass, but is preferably 90% by mass or less, more preferably 80% by mass or less. When the amount is within the range indicated above, the advantageous effect tends to be better achieved.

The composition preferably contains silica as a filler (reinforcing filler).

Any silica may be used, and examples include dry silica (anhydrous silicic acid) and wet silica (hydrous silicic acid). These may be used alone or in combinations of two or more. Wet silica is preferred among these because it has a large number of silanol groups.

Examples of commercial silica include those available from Degussa, Rhodia, Tosoh Silica Corporation, Solvay Japan, Tokuyama Corporation, etc.

The nitrogen adsorption specific surface area (N₂SA) of the silica is preferably 50 m²/g or more, more preferably 150 m²/g or more. The N₂SA is also preferably 300 m²/g or less, more preferably 250 m²/g or less, still more preferably 200 m²/g or less. When the N₂SA is within the range indicated above, the advantageous effect tends to be better achieved.

Here, the N₂SA of the silica can be measured in accordance with ASTM D3037-81.

The amount of silica per 100 parts by mass of the polymer component content (preferably per 100 parts by mass of the rubber component content) is preferably 0.1 parts by mass or more, more preferably 10 parts by mass or more, still more preferably 30 parts by mass or more, particularly preferably 50 parts by mass or more, but is preferably 200 parts by mass or less, more preferably 180 parts by mass or less, still more preferably 150 parts by mass or less, particularly preferably 120 parts by mass or less. When the amount is within the range indicated above, the advantageous effect tends to be better achieved.

The ratio of the amount (parts by mass) of silica per 100 parts by mass of the polymer component content (preferably per 100 parts by mass of the rubber component content) to the average primary particle size (nm) of the silica is preferably 0.01 or more, more preferably 0.1 or more, still more preferably 1 or more, but is preferably 2000 or less, more preferably 1500 or less, still more preferably 1000 or less, particularly preferably 100 or less, most preferably 10 or less, further most preferably 5 or less. When the ratio is within the range indicated above, the advantageous effect tends to be better achieved.

Herein, the average primary particle size of the silica can be determined by measuring the particle sizes of at least 400 primary particles of the silica observed in the field of view of a transmission or scanning electron microscope and averaging the particle sizes.

When the composition contains silica, it preferably contains a silane coupling agent together with the silica.

Any silane coupling agent may be used. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These may be used alone or in combinations of two or more.

Examples of commercial silane coupling agents include those available from Degussa, Momentive, Shin-Etsu Silicone, Tokyo Chemical Industry Co., Ltd., AZmax. Co., Dow Corning Toray Co., Ltd., etc.

The amount of silane coupling agents, if present, per 100 parts by mass of the silica content is preferably 0.1 parts by mass or more, more preferably 2 parts by mass or more, still more preferably 3 parts by mass or more. The amount is also preferably 20 parts by mass or less, more preferably 16 parts by mass or less, still more preferably 12 parts by mass or less. When the amount is within the range indicated above, the advantageous effect tends to be better achieved.

The composition preferably contains carbon black.

Examples of carbon black include N134, N110, N220, N234, N219, N339, N330, N326, N351, N550, and N762. These may be used alone or in combinations of two or more.

The nitrogen adsorption specific surface area (N₂SA) of the carbon black is preferably 5 m²/g or more, more preferably 30 m²/g or more, still more preferably 60 m²/g or more, particularly preferably 90 m²/g or more, most preferably 120 m²/g or more. The N₂SA is also preferably 300 m²/g or less, more preferably 200 m²/g or less, still more preferably 170 m²/g or less. When the N₂SA is within the range indicated above, the advantageous effect tends to be better achieved.

Here, the nitrogen adsorption specific surface area of the carbon black can be determined in accordance with JIS K 6217-2:2001.

The dibutyl phthalate oil absorption (DBP) of the carbon black is preferably 5 ml/100 g or more, more preferably 70 ml/100 g or more, still more preferably 90 ml/100 g or more. The DBP is also preferably 300 ml/100 g or less, more preferably 200 ml/100 g or less, still more preferably 160 ml/100 g or less, particularly preferably 130 ml/100 g or less. When the DBP is within the range indicated above, the advantageous effect tends to be better achieved.

Here, the DBP of the carbon black can be measured in accordance with JIS-K 6217-4:2001.

Examples of commercial carbon black include those available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc.

The amount of carbon black per 100 parts by mass of the polymer component content (preferably per 100 parts by mass of the rubber component content) is preferably 0.1 parts by mass or more, more preferably 1 part by mass or more, still more preferably 3 parts by mass or more, particularly preferably 5 parts by mass or more, but is preferably 200 parts by mass or less, more preferably 150 parts by mass or less, still more preferably 120 parts by mass or less, particularly preferably 80 parts by mass or less. When the amount is within the range indicated above, the advantageous effect tends to be better achieved.

The ratio of the amount (parts by mass) of carbon black per 100 parts by mass of the polymer component content (preferably per 100 parts by mass of the rubber component content) to the average primary particle size (nm) of the carbon black is preferably 0.01 or more, more preferably 0.1 or more, still more preferably 1 or more, but is preferably 2000 or less, more preferably 1500 or less, still more preferably 1000 or less, particularly preferably 10 or less, most preferably 2 or less. When the ratio is within the range indicated above, the advantageous effect tends to be better achieved.

Herein, the average primary particle size of the carbon black can be determined by measuring the particle sizes of at least 400 primary particles of the carbon black observed in the field of view of a transmission or scanning electron microscope and averaging the particle sizes.

The composition preferably contains sulfur.

Examples of sulfur include those commonly used in the rubber industry, such as powdered sulfur, precipitated sulfur, colloidal sulfur, insoluble sulfur, highly dispersible sulfur, and soluble sulfur. These may be used alone or in combinations of two or more.

Examples of commercial sulfur include those available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc.

The amount of sulfur per 100 parts by mass of the polymer component content (preferably per 100 parts by mass of the rubber component content) is preferably 0.1 parts by mass or more, more preferably 0.5 parts by mass or more, still more preferably 1 part by mass or more. The amount is also preferably 20 parts by mass or less, more preferably 10 parts by mass or less, still more preferably 8 parts by mass or less, particularly preferably 5 parts by mass or less. When the amount is within the range indicated above, the advantageous effect tends to be better achieved.

The composition preferably contains a vulcanization accelerator.

Examples of vulcanization accelerators include thiazole vulcanization accelerators such as 2-mercaptobenzothiazole and di-2-benzothiazolyl disulfide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazolylsulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more.

Examples of commercial vulcanization accelerators include those available from Kawaguchi Chemical Industry Co., Ltd., Ouchi Shinko Chemical Industrial Co., Ltd., Rhein Chemie, etc.

The amount of vulcanization accelerators per 100 parts by mass of the polymer component content (preferably per 100 parts by mass of the rubber component content) is preferably 0.1 parts by mass or more, more preferably 0.5 parts by mass or more, still more preferably 1 part by mass or more. The amount is also preferably 20 parts by mass or less, more preferably 10 parts by mass or less, still more preferably 8 parts by mass or less, particularly preferably 5 parts by mass or less. When the amount is within the range indicated above, the advantageous effect tends to be better achieved.

The composition preferably contains stearic acid.

Conventionally known stearic acid may be used, including, for example, those available from NOF Corporation, Kao Corporation, Fujifilm Wako Pure Chemical Corporation, Chiba Fatty Acid Co., Ltd., etc.

The amount of stearic acid per 100 parts by mass of the polymer component content (preferably per 100 parts by mass of the rubber component content) is preferably 0.1 parts by mass or more, more preferably 0.5 parts by mass or more, still more preferably 1 part by mass or more. The amount is also preferably 20 parts by mass or less, more preferably 10 parts by mass or less, still more preferably 8 parts by mass or less, particularly preferably 5 parts by mass or less. When the amount is within the range indicated above, the advantageous effect tends to be better achieved.

The composition may contain zinc oxide.

Conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

The amount of zinc oxide per 100 parts by mass of the polymer component content (preferably per 100 parts by mass of the rubber component content) is preferably 0.1 parts by mass or more, more preferably 0.5 parts by mass or more, still more preferably 1 part by mass or more. The amount is also preferably 20 parts by mass or less, more preferably 10 parts by mass or less, still more preferably 8 parts by mass or less, particularly preferably 5 parts by mass or less. When the amount is within the range indicated above, the advantageous effect tends to be better achieved.

The composition may contain an antioxidant.

Examples of antioxidants include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. These may be used alone or in combinations of two or more. Preferred among these are p-phenylenediamine and quinoline antioxidants, with p-phenylenediamine antioxidants being more preferred.

Examples of commercial antioxidants include those available from Seiko Chemical Co., Ltd., Sumitomo Chemical Co., Ltd., Ouchi Shinko Chemical Industrial Co., Ltd., Flexsys, etc.

The amount of antioxidants per 100 parts by mass of the polymer component content (preferably per 100 parts by mass of the rubber component content) is preferably 0.1 parts by mass or more, more preferably 0.5 parts by mass or more, still more preferably 1 part by mass or more. The amount is also preferably 20 parts by mass or less, more preferably 10 parts by mass or less, still more preferably 8 parts by mass or less, particularly preferably 5 parts by mass or less. When the amount is within the range indicated above, the advantageous effect tends to be better achieved.

The composition may contain a wax.

Any wax may be used, and examples include petroleum waxes such as paraffin waxes and microcrystalline waxes; naturally-occurring waxes such as plant waxes and animal waxes; and synthetic waxes such as polymers of ethylene, propylene, or other similar monomers. These may be used alone or in combinations of two or more.

Examples of commercial waxes include those available from Ouchi Shinko Chemical Industrial Co., Ltd., Nippon Seiro Co., Ltd., Seiko Chemical Co., Ltd., etc.

The amount of waxes per 100 parts by mass of the polymer component content (preferably per 100 parts by mass of the rubber component content) is preferably 0.1 parts by mass or more, more preferably 0.5 parts by mass or more, still more preferably 1 part by mass or more. The amount is also preferably 20 parts by mass or less, more preferably 10 parts by mass or less, still more preferably 8 parts by mass or less, particularly preferably 5 parts by mass or less. When the amount is within the range indicated above, the advantageous effect tends to be better achieved.

In addition to the above-mentioned components, the composition may contain additives commonly used in the tire industry, such as vulcanizing agents other than sulfur (e.g., organic crosslinking agents, organic peroxides), calcium carbonate, mica such as sericite, aluminum hydroxide, magnesium oxide, magnesium hydroxide, clay, talc, alumina, and titanium oxide. The amounts of these components are each preferably 0.1 parts by mass or more, but preferably 200 parts by mass or less per 100 parts by mass of the polymer component content (preferably the rubber component content).

The composition may be prepared, for example, by kneading the components using a rubber kneading machine such as an open roll mill or a Banbury mixer, and then vulcanizing the kneaded mixture.

The kneading conditions are as follows. In a base kneading step of kneading additives other than crosslinking agents (vulcanizing agents) and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably 80 to 110°C. Then, the composition obtained after kneading vulcanizing agents and vulcanization accelerators is usually vulcanized by, for example, press vulcanization. The vulcanization temperature is usually 140 to 190°C, preferably 150 to 185°C.

The composition may be used (as a tire rubber composition) in tire components, such as treads (cap treads), sidewalls, base treads, undertreads, clinches, bead apexes, breaker cushion rubbers, rubbers for carcass cord topping, insulations, chafers, and innerliners, and side reinforcement layers of run-flat tires. The composition may be suitably used in treads, among others. When the composition is used in treads, it may be used either only in a cap tread or only in a base tread, but is preferably used in both of them.

The tire of the present invention may be produced from the above-described composition by usual methods. Specifically, the tire may be produced by extruding the unvulcanized rubber composition, which contains additives as needed, into the shape of a tire component (particularly a tread (cap tread)), followed by forming and assembling it with other tire components in a usual manner on a tire building machine to build an unvulcanized tire, and then heating and pressurizing the unvulcanized tire in a vulcanizer.

The tire may be any type of tire, including pneumatic tires, solid tires, and airless tires. Preferred among these are pneumatic tires.

The tire may be suitably used as a tire for passenger vehicles, large passenger vehicles, large SUVs, trucks and buses, or two-wheeled vehicles, or as a racing tire, a winter tire (studless winter tire, snow tire, studded tire), an all-season tire, a run-flat tire, an aircraft tire, a mining tire, etc.

### EXAMPLES

The present invention is specifically described with reference to, but not limited to, examples.

The chemicals used in the synthesis or polymerization were purified by usual methods, if necessary.

Moreover, the methods for evaluation of the prepared polymers are collectively described below.

### (Measurement of weight average molecular weight (Mw) and number average molecular weight (Mn))

The weight average molecular weight (Mw) and number average molecular weight (Mn) of the polymers were determined by gel permeation chromatography (GPC) (GPC-8000 series available from Tosoh Corporation, detector:
differential refractometer, column: TSKGEL SUPERMULTIPORE HZ-M available from Tosoh Corporation) calibrated with polystyrene standards.

### (Structural identification of polymer)

The structural identification of the polymers was determined using a NMR instrument of JNM-ECA series available from JEOL Ltd. Here, the cis content was measured by infrared absorption spectrometry.

### (Polymerization of resin A (α-methylstyrene resin, PAMS))

An inert gas-purged glass flask was charged with 1 g of aluminum chloride and 200 g of toluene, and then 20 g of α-methylstyrene (AMS monomer) was dropwise added to the flask while maintaining the inner temperature at -50°C to - 20°C. A sample collected from the reaction solution was analyzed by GPC and found to have a weight average molecular weight (Mw) of 2132, a number average molecular weight (Mn) of 1132, and a molecular weight distribution of 1.9. Then, the reaction solution was stirred at room temperature, and when the inner temperature reached 0°C or higher, 60 g of water was added to the reaction solution to terminate the reaction. After separation to remove the aqueous layer, the addition of water and separation were repeated until the pH of the aqueous layer reached 4 or higher. Subsequently, the organic layer obtained by separation was air-dried to evaporate the toluene and then was dried under reduced pressure at 80°C and 10 Pa or less to a constant weight, thereby obtaining a resin A. The yield was almost 100%. GPC analysis revealed that it had a weight average molecular weight (Mw) of 2045, a number average molecular weight (Mn) of 980, and a molecular weight distribution of 2.1.

### (Polymerization of resin B (ethyl vinyl ether resin (poly(ethyl vinyl ether), PEVE)))

An inert gas-purged glass flask was charged with 1 g of aluminum chloride and 200 g of toluene, and then a solution of ethyl vinyl ether in toluene (20.3 g of ethyl vinyl ether (EVE monomer), 100 g of toluene) was dropwise added to the flask while maintaining the inner temperature at -20°C to -5°C. A sample collected from the reaction solution was analyzed by GPC and found to have a weight average molecular weight (Mw) of 2201, a number average molecular weight (Mn) of 1202, and a molecular weight distribution of 1.8. The reaction solution was stirred at room temperature, and when the inner temperature reached 0°C or higher, 60 g of water was added to the reaction solution to terminate the reaction. After separation to remove the aqueous layer, the addition of water and separation were repeated until the pH of the aqueous layer reached 4 or higher. Subsequently, the organic layer obtained by separation was air-dried to evaporate the toluene and then was dried under reduced pressure at 80°C and 10 Pa or less to a constant weight, thereby obtaining a resin B. The yield was almost 100%. GPC analysis revealed that it had a weight average molecular weight (Mw) of 2205, a number average molecular weight (Mn) of 1110, and a molecular weight distribution of 2.0.

### (Polymerization of resin C (poly(N-tert-butylacrylamide), PNTBAM))

A nitrogen-purged glass flask was charged with 23.9 g of N-tert-butylacrylamide (NTBAM monomer) and then with 200 mL of toluene, followed by stirring at room temperature for 30 minutes to give a homogeneous solution. Subsequently, 1.10 g of 2,2'-azobis(isobutyronitrile) (AIBN) was added to the solution, and the mixture was reacted under reflux for 3 hours. Then, the toluene was removed using a rotary evaporator, and the residue was dried under reduced pressure at 80°C and 10 Pa or less to a constant weight, thereby obtaining a resin C. The yield was almost 100%. GPC analysis revealed that it had a weight average molecular weight (Mw) of 9721, a number average molecular weight (Mn) of 3736, and a molecular weight distribution of 2.6.

### (Polymerization of resin D (poly(N-n-butylacrylamide), PNNBAM))

A nitrogen-purged glass flask was charged with 23.9 g of N-n-butylacrylamide (NNBAM monomer) and then with 200 mL of toluene, followed by stirring at room temperature for 30 minutes to give a homogeneous solution. Subsequently, 1.10 g of 2,2'-azobis(isobutyronitrile) (AIBN) was added to the solution, and the mixture was reacted under reflux for 3 hours. Then, the toluene was removed using a rotary evaporator, and the residue was dried under reduced pressure at 80°C and 10 Pa or less to a constant weight, thereby obtaining a resin D. The yield was almost 100%. GPC analysis revealed that it had a weight average molecular weight (Mw) of 9521, a number average molecular weight (Mn) of 3661, and a molecular weight distribution of 2.6.

### (Confirmation of temperature-induced changes in interaction with antifreeze)

Each of the monomers or resins was introduced into an antifreeze (a liquid consisting of methanol and water which may be prepared by mixing water with methanol in an amount of 9 times the volume of the water at 25°C for 30 minutes) to a concentration of 1% by mass. The mixture was gradually heated from -20°C to +20°C, while it was stored for 2 hours at different temperatures, followed by observing whether the mixture was clear or cloudy. Table 1 shows the results.

**[Table 1]**

| Solubility of materials in antifreeze | | | | | |
|---|---|---|---|---|---|
| | -20°C | -10°C | 0°C | +10°C | +20°C |
| AMS monomer | Clear | Clear | Clear | Clear | Clear |
| EVE monomer | Clear | Clear | Clear | Clear | Clear |
| NTBAM monomer | Clear | Clear | Clear | Clear | Clear |
| NNBAM monomer | Clear | Clear | Clear | Clear | Clear |
| Resin A (PAMS) | Insoluble | Insoluble | Insoluble | Insoluble | Insoluble |
| Resin B (PEVE) | Clear | Clear | Clear | Cloudy | Cloudy |
| Resin C (PNTBAM) | Clear | Clear | Clear | Slightly cloudy | Cloudy |
| Resin D (PNNBAM) | Clear | Clear | Clear | Slightly cloudy | Cloudy |

Table 1 demonstrates the following.

Each monomer was soluble in the antifreeze to give a clear solution at all the temperatures.

The resin A was insoluble in the antifreeze at all the temperatures.

The resin B gave a clear solution at lower than 10°C, but at 10°C or higher, the solution gradually became cloudy and turned into a dispersion containing insolubles. This indicates that the resin B (PEVE) has a LCST within the range of -10°C to +10°C.

The resin C gave a clear solution at lower than 10°C, but at 10°C or higher, the solution gradually became cloudy and turned into a dispersion containing insolubles. This indicates that the resin C (PNTBAM) has a LCST within the range of -10°C to 10°C.

The resin D gave a clear solution at lower than 10°C, but at 10°C or higher, the solution gradually became cloudy and turned into a dispersion containing insolubles. This indicates that the resin D (PNNBAM) has a LCST within the range of -10°C to 10°C.

The above results revealed that as a group that changes its interaction with respect to an antifreeze with changes in temperature (preferably a group that shows a lower critical solution temperature in an antifreeze, more preferably a poly(alkyl vinyl ether) or a group of formula (II), still more preferably a group of formula (I) or a group of formula (II)) changes its interaction with respect to an antifreeze with changes in temperature, i.e., as temperature changes may change the hydrophilicity to change the compatibility with other components in the composition, it is possible to change tire performance in response to changes in temperature.

Further, as the group has a lower critical solution temperature of -20°C to 20°C, it is possible to change tire performance in a temperature range necessary for a tire. Specifically, the plasticizer functions as a hydrophobic plasticizer at a temperature higher than the lower critical solution temperature of the group, while it functions as a hydrophilic plasticizer at a temperature lower than the lower critical solution temperature of the group. Accordingly, it is shown that the plasticizer can change tire performance at that boundary temperature range and thus can change tire performance in a temperature range necessary for a tire.

### <Synthesis of plasticizer containing group that changes its interaction with respect to antifreeze with changes in temperature>

### (Polymerization of specified plasticizer A (α-methylstyrene-ethyl vinyl ether resin, PAMS-PEVE (resin B)))

An inert gas-purged glass flask was charged with 1 g of aluminum chloride and 200 g of toluene, and then 20 g of α-methylstyrene was dropwise added to the flask while maintaining the inner temperature at -50 to -20°C. A sample collected from the reaction solution was analyzed by GPC and found to have a weight average molecular weight (Mw) of 2165, a number average molecular weight (Mn) of 1202, and a molecular weight distribution of 1.8. Then, a solution of ethyl vinyl ether in toluene (20.3 g of ethyl vinyl ether monomer, 100 g of toluene) was dropwise added to the reaction solution while maintaining the inner temperature at -20°C to -5°C. A sample collected from the reaction solution was analyzed by GPC and found to have a weight average molecular weight (Mw) of 4231, a number average molecular weight (Mn) of 2202, and a molecular weight distribution of 1.9. The reaction solution was stirred at room temperature, and when the inner temperature reached 0°C or higher, 60 g of water was added to the reaction solution to terminate the reaction. After separation to remove the aqueous layer, the addition of water and separation were repeated until the pH of the aqueous layer reached 4 or higher. Subsequently, the organic layer obtained by separation was air-dried to evaporate the toluene and then was dried under reduced pressure at 80°C and 10 Pa or less to a constant weight, thereby obtaining a specified plasticizer A. The yield was almost 100%. GPC analysis revealed that it had a weight average molecular weight (Mw) of 4231, a number average molecular weight (Mn) of 2202, and a molecular weight distribution of 1.9.

### (Polymerization of specified plasticizer B (α-methylstyrene-N-tert-butylacrylamide resin, PAMS-PNTBAM (resin C)))

A nitrogen-purged glass flask was charged with 20 g of α-methylstyrene and then with 25 mL of toluene, followed by stirring at room temperature for 30 minutes to give a homogeneous solution. Subsequently, 1.10 g of 2,2'-azobis(isobutyronitrile) (AIBN) was added to the solution, and the mixture was reacted under reflux for 3 hours. The reaction solution was cooled to 40°C, and then 20 g of N-tert-butylacrylamide was added to the reaction solution, followed by reacting the mixture under reflux for 3 hours. Then, the toluene solvent was removed from the reaction solution using a rotary evaporator, and the remaining dry solid was dried under reduced pressure at a degree of pressure reduction of 0.1 Pa or less at 80°C for 8 hours to obtain a specified plasticizer B. The yield was almost 100%. GPC analysis revealed that it had a weight average molecular weight (Mw) of 3265, a number average molecular weight (Mn) of 1256, and a molecular weight distribution of 2.6.

### (Polymerization of specified plasticizer C (α-methylstyrene-N-n-butylacrylamide resin, PAMS-PNNBAM (resin D)))

A nitrogen-purged glass flask was charged with 20 g of α-methylstyrene and then with 25 mL of toluene, followed by stirring at room temperature for 30 minutes to give a homogeneous solution. Subsequently, 1.10 g of 2,2'-azobis(isobutyronitrile) (AIBN) was added to the solution, and the mixture was reacted under reflux for 3 hours. The reaction solution was cooled to 40°C, and then 20 g of N-n-butylacrylamide was added to the reaction solution, followed by reacting the mixture under reflux for 3 hours. Then, the toluene solvent was removed from the reaction solution using a rotary evaporator, and the remaining dry solid was dried under reduced pressure at a degree of pressure reduction of 0.1 Pa or less at 80°C for 8 hours to obtain a specified plasticizer C. The yield was almost 100%. GPC analysis revealed that it had a weight average molecular weight (Mw) of 3374, a number average molecular weight (Mn) of 1123, and a molecular weight distribution of 3.0.

### (Polymerization of specified plasticizer D (α-methylstyrene-ethyl vinyl ether resin, oil-like PAMS-PEVE (resin B)))

An inert gas-purged glass flask was charged with 1 g of aluminum chloride and 200 g of toluene, and then 5 g of α-methylstyrene was dropwise added to the flask while maintaining the inner temperature at -50 to -20°C. A sample collected from the reaction solution was analyzed by GPC and found to have a weight average molecular weight (Mw) of 980, a number average molecular weight (Mn) of 602, and a molecular weight distribution of 1.6. Then, a solution of ethyl vinyl ether in toluene (35.0 g of ethyl vinyl ether monomer, 100 g of toluene) was dropwise added to the reaction solution while maintaining the inner temperature at -20°C to -5°C. A sample collected from the reaction solution was analyzed by GPC and found to have a weight average molecular weight (Mw) of 1127, a number average molecular weight (Mn) of 701, and a molecular weight distribution of 1.6. The reaction solution was stirred at room temperature, and when the inner temperature reached 0°C or higher, 60 g of water was added to the reaction solution to terminate the reaction. After separation to remove the aqueous layer, the addition of water and separation were repeated until the pH of the aqueous layer reached 4 or higher. Subsequently, the organic layer obtained by separation was air-dried to evaporate the toluene and then was dried under reduced pressure at 80°C and 10 Pa or less to a constant weight, thereby obtaining a specified plasticizer D. The yield was almost 100%. GPC analysis revealed that it had a weight average molecular weight (Mw) of 1042, a number average molecular weight (Mn) of 604, and a molecular weight distribution of 1.7.

### (Polymerization of specified plasticizer E (liquid resin (polybutadiene)-PEVE (resin B)))

An inert gas-purged glass flask was charged with 1 g of aluminum chloride and 200 g of toluene, and then a solution of ethyl vinyl ether in toluene (20.0 g of ethyl vinyl ether monomer, 100 g of toluene) was dropwise added to the flask while maintaining the inner temperature at -50 to -20°C. A sample collected from the reaction solution was analyzed by GPC and found to have a weight average molecular weight (Mw) of 1129, a number average molecular weight (Mn) of 988, and a molecular weight distribution of 1.6. Then, a solution of maleic acid-modified BR in toluene (20.0 g of maleic acid-modified BR, Ricon 130MA8, 100 g of toluene) was dropwise added to the reaction solution while maintaining the inner temperature at -20°C to -5°C. A sample collected from the reaction solution was analyzed by GPC. After confirming a new peak appearing on the higher molecular weight side than the material maleic acid-modified BR, the reaction solution was stirred at room temperature, and when the inner temperature reached 0°C or higher, 60 g of water was added to the reaction solution to terminate the reaction. After separation to remove the aqueous layer, the addition of water and separation were repeated until the pH of the aqueous layer reached 4 or higher. Subsequently, the organic layer obtained by separation was air-dried to evaporate the toluene and then was dried under reduced pressure at 80°C and 10 Pa or less to a constant weight, thereby obtaining a specified plasticizer E. The yield was almost 100%. GPC analysis revealed that it had a weight average molecular weight (Mw) of 3631, a number average molecular weight (Mn) of 2804, and a molecular weight distribution of 1.3.

### (Polymerization of specified plasticizer F (polystyrene-ethyl vinyl ether resin, PS-PEVE (resin B)))

An inert gas-purged glass flask was charged with 1 g of aluminum chloride and 200 g of toluene, and then 20 g of styrene was dropwise added to the flask while maintaining the inner temperature at 0 to 20°C. A sample collected from the reaction solution was analyzed by GPC and found to have a weight average molecular weight (Mw) of 1565, a number average molecular weight (Mn) of 1122, and a molecular weight distribution of 1.4. Then, a solution of ethyl vinyl ether in toluene (20.3 g of ethyl vinyl ether monomer, 100 g of toluene) was dropwise added to the reaction solution while maintaining the inner temperature at 0°C to 20°C. A sample collected from the reaction solution was analyzed by GPC and found to have a weight average molecular weight (Mw) of 3231, a number average molecular weight (Mn) of 2302, and a molecular weight distribution of 1.4. The reaction solution was stirred at room temperature, and when the inner temperature reached 20°C or higher, 60 g of water was added to the reaction solution to terminate the reaction. After separation to remove the aqueous layer, the addition of water and separation were repeated until the pH of the aqueous layer reached 4 or higher. Subsequently, the organic layer obtained by separation was air-dried to evaporate the toluene and then was dried under reduced pressure at 80°C and 10 Pa or less to a constant weight, thereby obtaining a specified plasticizer F. The yield was almost 100%. GPC analysis revealed that it had a weight average molecular weight (Mw) of 3331, a number average molecular weight (Mn) of 2342, and a molecular weight distribution of 1.4.

### (Polymerization of specified plasticizer G (polyterpene-ethyl vinyl ether resin, PTR-PEVE (resin B)))

An inert gas-purged glass flask was charged with 1 g of aluminum chloride and 200 g of toluene, and then 20 g of β-pinene was dropwise added to the flask while maintaining the inner temperature at 0 to 20°C. A sample collected from the reaction solution was analyzed by GPC and found to have a weight average molecular weight (Mw) of 1065, a number average molecular weight (Mn) of 802, and a molecular weight distribution of 1.3. Then, a solution of ethyl vinyl ether in toluene (20.3 g of ethyl vinyl ether monomer, 100 g of toluene) was dropwise added to the reaction solution while maintaining the inner temperature at 0°C to 20°C. A sample collected from the reaction solution was analyzed by GPC and found to have a weight average molecular weight (Mw) of 2252, a number average molecular weight (Mn) of 1165, and a molecular weight distribution of 1.9. The reaction solution was stirred at room temperature, and when the inner temperature reached 20°C or higher, 60 g of water was added to the reaction solution to terminate the reaction. After separation to remove the aqueous layer, the addition of water and separation were repeated until the pH of the aqueous layer reached 4 or higher. Subsequently, the organic layer obtained by separation was air-dried to evaporate the toluene and then was dried under reduced pressure at 80°C and 10 Pa or less to a constant weight, thereby obtaining a specified plasticizer G. The yield was almost 100%. GPC analysis revealed that it had a weight average molecular weight (Mw) of 2382, a number average molecular weight (Mn) of 1342, and a molecular weight distribution of 1.8.

The specified plasticizers A to G prepared above are each a plasticizer containing a group that changes its interaction with respect to an antifreeze with changes in temperature and has a lower critical solution temperature of -20°C to 20°C.

### <Synthesis of polymer (rubber component)>

### (Polymerization of polymer A)

A sufficiently nitrogen-purged heat-resistant vessel was charged with 1500 mL of n-hexane, 25 g of styrene, 75 g of 1,3-butadiene, 0.2 mmol of tetramethylethylenediamine, and 0.24 mmol of n-butyllithium, followed by stirring at 0°C for 48 hours. Subsequently, the reaction was terminated by adding alcohol. Then, 24 mL of a 1 mmol/L solution of BHT in ethanol was added to the reaction solution. A 10 mL fraction of the polymerization solution was collected, precipitated with 40 mL of ethanol, and then dried to obtain a polymer A. The thus obtained copolymer had a weight average molecular weight of 460,000 and a styrene content of 25% by mass, and the yield was 99%.

### (Polymerization of polymer B)

### Preparation of catalyst solution B

A dried and nitrogen-purged 1 L pressure-resistant stainless steel vessel was charged with 350 mL of cyclohexane and 35 g of 1,3-butadiene monomer. To the vessel were added 54 mL of a 20 vol% solution of neodymium versatate in cyclohexane and then 130 mL of a solution of PMAO in toluene, followed by stirring for 30 minutes. Then, 30 mL of a 1 M solution of DAIBAH in hexane was added and then stirred for 30 minutes. Subsequently, 15 mL of a 1 M solution of 2-chloro-2-methylpropane in cyclohexane was added and then stirred for 30 minutes to give a catalyst solution B.

### Polymerization of polymer B

A dried and nitrogen-purged 3 L pressure-resistant stainless steel vessel was charged with 2000 mL of cyclohexane and 100 g of 1,3-butadiene, and then 10 mL of a 1 mol/L solution of TIBA in normal hexane was added, followed by stirring for 5 minutes. After confirming that the solution was clear, 30 mL of the catalyst solution B was added to perform a polymerization reaction at 80°C for 3 hours. After the 3 hours, 50 mL of a 1 M solution of isopropanol in THF as a reaction-terminating agent was dropwise added to terminate the reaction. A 10 mL fraction of the polymerization solution was collected, precipitated with 40 mL of ethanol, and then dried to obtain a polymer B. The polymer had a weight average molecular weight of 800,000 and a cis content of 98% by mass, and the yield was 99%.

### (Production of hydrogenated SBR)

A sufficiently nitrogen-purged heat-resistant reaction vessel was charged with n-hexane, styrene, 1,3-butadiene, N,N,N',N'-tetramethylethylenediamine (TMEDA), and n-butyllithium, followed by stirring at 50°C for 5 hours to perform a polymerization reaction. Thereafter, the reaction solution was stirred for 20 minutes while supplying hydrogen gas at a pressure of 0.4 MPa gauge to react unreacted polymer terminal lithium with hydrogen into lithium hydride. Hydrogenation was performed using a titanocene dichloride-based catalyst at a hydrogen gas supply pressure of 0.7 MPa gauge and a reaction temperature of 90°C. Once the cumulative amount of absorbed hydrogen reached the amount corresponding to the target degree of hydrogenation, the reaction temperature was brought to room temperature, and the hydrogen pressure was returned to an ordinary pressure. Then, the reaction solution was drawn from the reaction vessel and introduced into water with stirring. Then, the solvent was removed by steam stripping to obtain a hydrogenated SBR.

The chemicals used in the examples and comparative examples below are listed below.
NR: TSR20 (natural rubber)
SBR: the above-described polymer A
Hydrogenated SBR: the above-described hydrogenated SBR (conjugated diene unit: 3.3 mol%, non-conjugated olefin unit: 88.2 mol%, aromatic vinyl unit: 8.5 mol% (styrene content: 25% by mass), Mw: 450,000)
BR: the above-described polymer B
Resins A to D: the above-described resins A to D
Specified plasticizers A to G: the above-described specified plasticizers A to G
Carbon black: N110 (N₂SA: 144 m²/g, DBP: 115 ml/100 g, average primary particle size: 18 nm) available from Cabot Japan K.K.
Silica: ULTRASIL VN3 (N₂SA: 175 m²/g, average primary particle size: 16 nm) available from Evonik Degussa
Silane coupling agent: Si69 (bis(3-triethoxysilylpropyl)tetrasulfide) available from Evonik Degussa
Antioxidant: NOCRAC 6C (N-(1,3-dimethylbutyl)-N'-phenyl-p-phenylenediamine) available from Ouchi Shinko Chemical Industrial Co., Ltd.
Stearic acid: stearic acid available from NOF Corporation
Zinc oxide: zinc oxide #1 available from Mitsui Mining & Smelting Co., Ltd.
Sulfur: powdered sulfur available from Tsurumi Chemical Industry Co., Ltd.
Vulcanization accelerator (1): NOCCELER CZ (N-cyclohexyl-2-benzothiazolylsulfenamide) available from Ouchi Shinko Chemical Industrial Co., Ltd.
Vulcanization accelerator (2): NOCCELER D (1,3-diphenylguanidine) available from Ouchi Shinko Chemical Industrial Co., Ltd.

### (Examples and Comparative Examples)

According to the formulation recipe shown in Table 2, the chemicals other than the sulfur and vulcanization accelerators were kneaded using a 1.77 L Banbury mixer (Kobe Steel, Ltd.) at 150°C for 5 minutes to obtain a kneaded mixture. Then, the sulfur and vulcanization accelerators were added to the kneaded mixture, and they were kneaded in an open roll mill at 80°C for 5 minutes to obtain an unvulcanized rubber composition.

The unvulcanized rubber composition was press-vulcanized at 170°C for 15 minutes to obtain a vulcanized rubber composition.

The vulcanized rubber compositions prepared as above were subjected to the following evaluations. Table 2 shows the results.

### (Fuel economy)

The tan δ of each vulcanized rubber composition was measured at a dynamic strain amplitude of 1%, a frequency of 10 Hz, and a temperature of 50°C using a spectrometer available from Ueshima Seisakusho Co., Ltd. Then, the reciprocal of the tan δ was expressed as an index relative to Comparative Example 1 (= 100). A higher index indicates a smaller rolling resistance and better fuel economy.

### (Wet grip performance)

Wet grip performance was evaluated using a flat belt friction tester (FR5010 model) available from Ueshima Seisakusho Co., Ltd. A cylindrical rubber specimen (width: 20 mm, diameter: 100 mm) prepared from each vulcanized rubber composition was tested at a speed of 20 km/h, a load of 4 kgf, and a road surface temperature of 20°C to change the slip ratio of the sample on the road surface from 0 to 70%, and then the maximum friction coefficient detected was read and expressed as an index relative to Comparative Example 1 (= 100). A higher index indicates a higher maximum friction coefficient and better wet grip performance.

The overall performance in terms of fuel economy and wet grip performance is indicated by the sum of the two indices of fuel economy and wet grip performance.

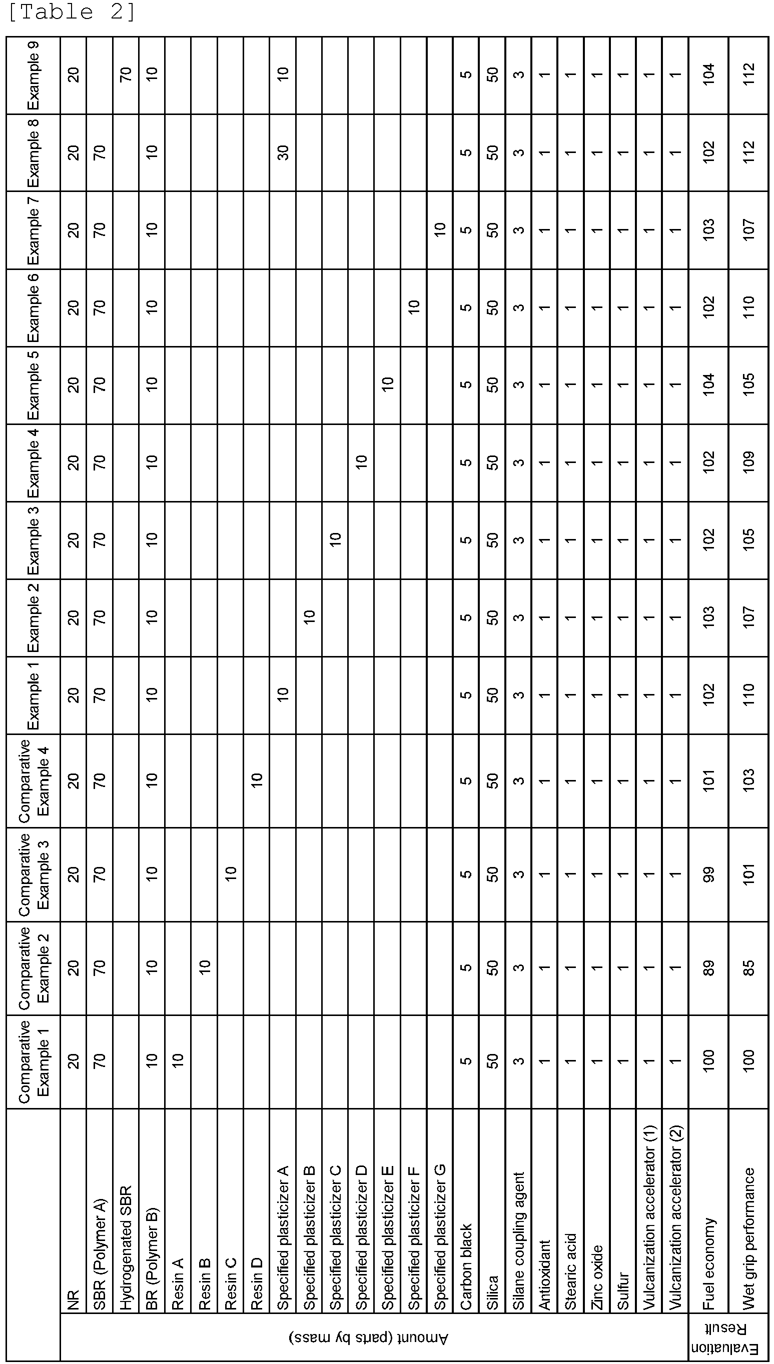

As shown in Table 2, the compositions of the examples contained a plasticizer for resins and/or elastomers which contained a group that changes its interaction with respect to an antifreeze with changes in temperature and in which the group had a lower critical solution temperature of - 20°C to 20°C, and they were capable of changing tire performance in a temperature range necessary for a tire and were also usable for the preparation of a tire composition.

Exemplary embodiments of the present invention include:
Embodiment 1. A plasticizer for at least one of resins or elastomers,
the plasticizer containing a group that changes its interaction with respect to an antifreeze with changes in temperature,
the group having a lower critical solution temperature of -20°C to 20°C.
Embodiment 2. The plasticizer according to Embodiment 1,
   wherein the plasticizer is an oil, an ester plasticizer, or a liquid or solid resin.
Embodiment 3. The plasticizer according to Embodiment 1,
   wherein the plasticizer is a liquid or solid resin.
Embodiment 4. The plasticizer according to any one of Embodiments 1 to 3,
   wherein the group has a lower critical solution temperature of -20°C to 10°C.
Embodiment 5. The plasticizer according to any one of Embodiments 1 to 4,
   wherein the group is a group represented by the following formula (I) or a group represented by the following formula (II): 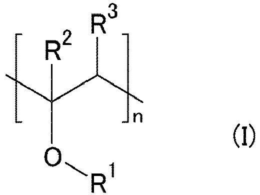 wherein n represents an integer of 1 to 1000; and R¹, R², and R³ each independently represent a hydrogen atom or a hydrocarbyl group, 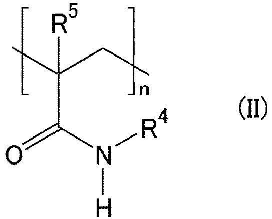 wherein n represents an integer of 1 to 1000; R⁴ represents a n-butyl group or a tert-butyl group; and R⁵ represents a hydrogen atom or a hydrocarbyl group.
Embodiment 6. The plasticizer according to any one of Embodiments 1 to 5,
   wherein the group is poly(ethyl vinyl ether), poly(N-tert-butylacrylamide), or poly(N-n-butylacrylamide).
Embodiment 7. A composition, containing the plasticizer according to any one of Embodiments 1 to 6.
Embodiment 8. The composition according to Embodiment 7,
   wherein the composition contains at least one rubber.
Embodiment 9. The composition according to Embodiment 8,
   wherein the rubber includes a multi-component copolymer containing a conjugated diene unit, a non-conjugated olefin unit, and an aromatic vinyl unit.
Embodiment 10. The composition according to Embodiment 8 or 9,
   wherein the composition contains silica, and
   a ratio of an amount (parts by mass) of silica per 100 parts by mass of a rubber component content in the composition to an average primary particle size (nm) of the silica is 1 to 1000.
Embodiment 11. The composition according to any one of Embodiments 8 to 10,
   wherein the composition contains carbon black, and
   a ratio of an amount (parts by mass) of carbon black per 100 parts by mass of a rubber component content in the composition to an average primary particle size (nm) of the carbon black is 1 to 1000.
Embodiment 12. The composition according to any one of Embodiments 7 to 11,
   wherein the composition is for use in a tire tread.
Embodiment 13. A tire, including a tire component containing the composition according to any one of Embodiments 7 to 12.
Embodiment 14. The tire according to Embodiment 13,
   wherein the tire component is a tread.

## Claims

1. A plasticizer for at least one of resins or elastomers,
the plasticizer comprising a group that changes its interaction with respect to an antifreeze with changes in temperature,
the group having a lower critical solution temperature of -20°C to 20°C.

2. The plasticizer according to claim 1,
wherein the plasticizer is an oil, an ester plasticizer, or a liquid or solid resin.

3. The plasticizer according to claim 1,
wherein the plasticizer is a liquid or solid resin.

4. The plasticizer according to any one of claims 1 to 3,
wherein the group has a lower critical solution temperature of -20°C to 10°C.

5. The plasticizer according to any one of claims 1 to 4,
wherein the group is a group represented by the following formula (I) or a group represented by the following formula (II): 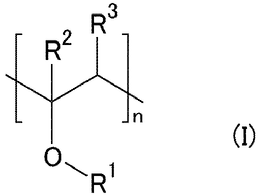 wherein n represents an integer of 1 to 1000; and R¹, R², and R³ each independently represent a hydrogen atom or a hydrocarbyl group, 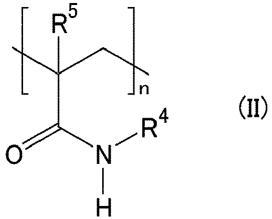 wherein n represents an integer of 1 to 1000; R⁴ represents a n-butyl group or a tert-butyl group; and R⁵ represents a hydrogen atom or a hydrocarbyl group.

6. The plasticizer according to any one of claims 1 to 5,
wherein the group is poly(ethyl vinyl ether), poly(N-tert-butylacrylamide), or poly(N-n-butylacrylamide).

7. A composition, comprising the plasticizer according to any one of claims 1 to 6.

8. The composition according to claim 7,
wherein the composition comprises at least one rubber.

9. The composition according to claim 8,
wherein the rubber comprises a multi-component copolymer containing a conjugated diene unit, a non-conjugated olefin unit, and an aromatic vinyl unit.

10. The composition according to claim 8 or 9,
wherein the composition comprises silica, and
a ratio of an amount (parts by mass) of silica per 100 parts by mass of a rubber component content in the composition to an average primary particle size (nm) of the silica is 1 to 1000.

11. The composition according to any one of claims 8 to 10,
wherein the composition comprises carbon black, and
a ratio of an amount (parts by mass) of carbon black per 100 parts by mass of a rubber component content in the composition to an average primary particle size (nm) of the carbon black is 1 to 1000.

12. The composition according to any one of claims 7 to 11,
wherein the composition is for use in a tire tread.

13. A tire, comprising a tire component comprising the composition according to any one of claims 7 to 12.

14. The tire according to claim 13,
wherein the tire component is a tread.
